# EUROPEAN PATENT SPECIFICATION

(11) **EP 1 241 077 B1**
(45) Date of publication and mention of the grant of the patent: **09.04.2008**
(21) Application number: 02006014.1
(22) Date of filing: 15.03.2002
(51) Int. Cl.: B62D 21/11, B62D 21/18, B60K 5/12, B60G 3/20, B60G 7/02, B60G 25/00, B60K 5/00

(54) **Lorry with a lowered, plane floor cab**
Lastkraftwagen mit niedrigem, ebenem Fahrerhausboden
Camion à plancher de cabine surbaissé et plat

(30) Priority: 16.03.2001 IT TO010256
(43) Date of publication of application: 18.09.2002
(73) Proprietor: IVECO S.p.A., 10156 Torino (IT)
(72) Inventor: Bracco, Sergio, 10090 Castagneto Po (IT); Fumarola, Massimo, 20137 Milano (IT); Montali, Marcello, 10132 Torino (IT)
(74) Representative: Gervasi, Gemma

(56) References cited:
- EP-A- 0 591 719
- EP-A- 0 940 272
- DE-A- 4 006 418
- DE-A- 4 032 823
- FR-A- 2 156 290
- FR-A- 2 291 061
- US-A- 3 243 007
- US-A- 4 469 369
- US-A- 5 373 892

## Description

The present invention relates to an industrial vehicle, in particular a lorry.

As is known, lorries are provided with a frame comprising a pair of parallel longitudinal members to which the drive unit and the suspensions are connected. The housing of the engine and the front suspension generally sets fairly stringent design constraints as regards the dimensions of the cab.

The front suspensions generally used in lorries, and in particular in heavy lorries, comprise a rigid axle to whose ends the wheel spindles are connected and which is connected to the longitudinal members by means of respective springs and shock absorbers. The axle extends below the longitudinal members and the engine. This axle therefore imposes a limit on the depth at which the engine can be positioned, which engine must be disposed at a height such as to take account of the jolting of the axle. The engine, moreover, has a substantial height, part of which is due to the size of the oil sump. This means that minimum height at which the floor of the cab can be disposed, at least in its central zone in the vicinity of the engine, is imposed by the bulk of the engine and by the jolting of the axle.

It will be appreciated that, for reasons of ease of entry and comfort in the cab, it would be better to dispose the floor as low as possible with respect to the road surface and make it substantially plane. These requirements are normally incompatible with the constraints discussed above.

In practice, in known cabs with plane floors, these floors have to be obtained above a tunnel which houses the upper part of the engine, requiring a large number of steps far entry into the passenger space and making it difficult to embark and disembark; moreover, a "high" floor always means that the overall height of the cab is substantial, entailing evident problems of stability and of an aerodynamic nature, at least in vehicles with a body which is not very high.

With this aim, it is known from US-A-5373892 an enhancement of the aerodynamics of the vehicle by utilising a dry sump means within a dry sump lubricated engine which eliminates a conventional oil pan, and allows a replacing cover to be smaller, and thereby lowering the overall profile of the engine.

In other known solutions, the floor is lowered in the area of the driving station to form a "well" which can be readily accessed from outside; in this case there is, however, a step within the cab which is used to move from the driving station to the remaining area of the cab.

As an alternative solution to this problem, it is known from EP-A-0591719 a commercial vehicle, in particular cab over engine lorry, having a chassis whose frame consists of two longitudinal members bearing a drive unit therebetween and a driver's cab onto such drive unit, the connection between said two longitudinal members of the frame is obtained via transverse members shaped as a cradle structure. This document covers the preamble features of independent claim 1.

This arrangement permits to lower the floor of the cabin but entails the drawback of a substantial complicate assembly at the factory line for the whole structure constituted by the frame, the drive unit and the suspension system, which leads to greater assembling times and relevant higher costs.

The object of the present invention is to provide an industrial vehicle, in particular a lorry, which is free from the drawbacks connected with known vehicles discussed above.

The present invention therefore relates to a lorry according to appended claim 1. Preferred embodiments are object of the appended dependent claims.

The invention is set out in further detail in the following description of a preferred embodiment, given purely by way of non-limiting example, and made with reference to the accompanying drawings, in which:
Fig. 1 is a partial front view of an engine/front suspension unit of an industrial vehicle in accordance with the present invention;
Fig. 2 is a side view of the unit of Fig. 1, with some parts removed for clarity;
Fig. 3 is a perspective view of the unit of Fig. 1, with some parts removed for clarity;

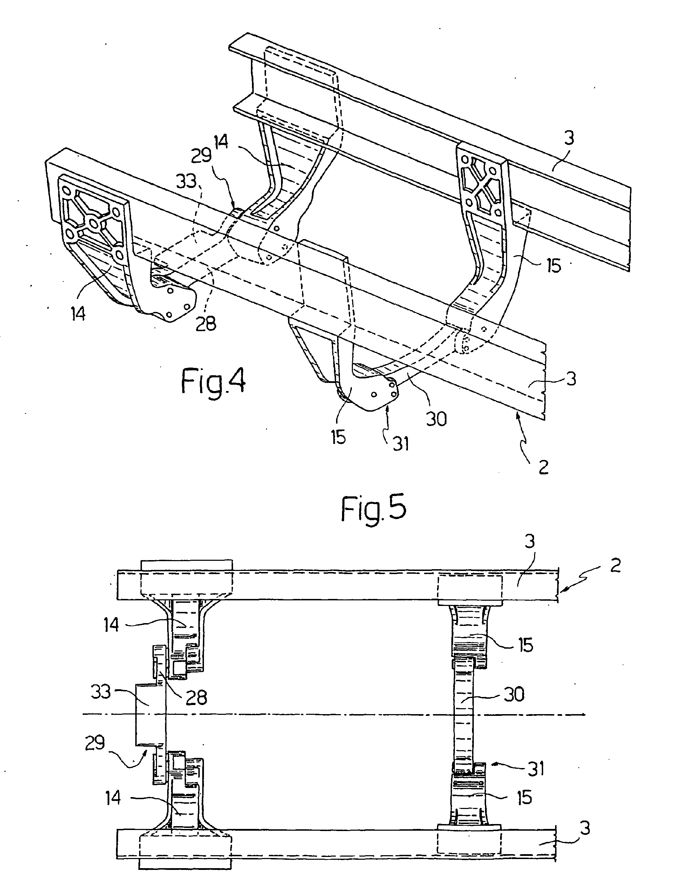

Fig. 4 is a perspective view of support sub-assemblies for the unit of Fig. 3;
Fig. 5 is a plan view of the sub-assemblies of Fig. 4.

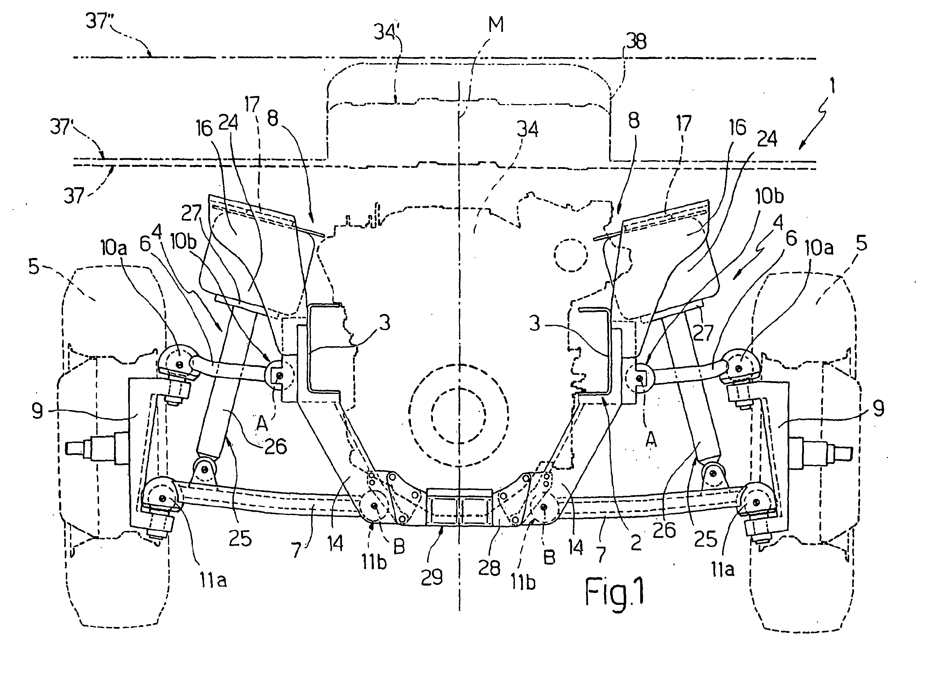

In Figs. 1, 2 and 3, a lorry is shown overall by 1 in respect solely of those parts required for comprehension of the present invention. The lorry 1 is provided with a frame 2 comprising a pair of parallel and facing longitudinal members 3 having a C-shaped cross-section.

According to the present invention, the vehicle 1 comprises independent suspensions 4 for the respective front wheels 5. Each suspension 4 comprises a pair of respective upper and lower arms 6, 7 which are connected at one end to a support structure 8 rigid with the frame 3 and described in further detail below, and are connected at their opposite end to a spindle 9 of the wheel 5 by means of respective ball joints 10a, 11a.

Only one suspension 4 will be described below, as the suspensions 4 and the respective support structures 8 are symmetrical with respect to a longitudinal median plane M of the vehicle.

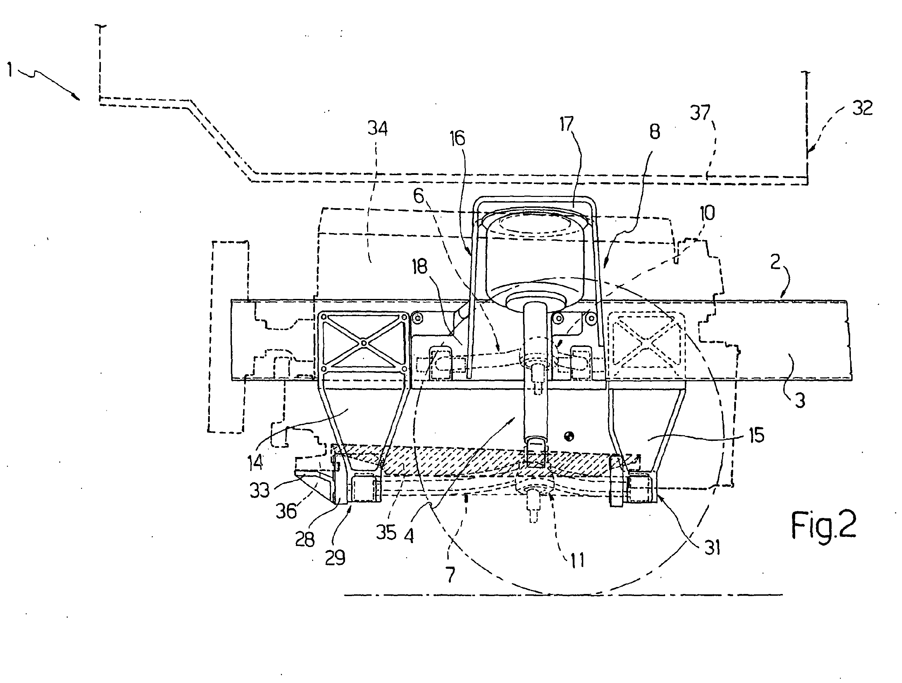

With reference to Fig. 2, and in further detail, the support structure 8 comprises a front yoke 14 and a rear yoke 15 (Fig. 2) rigidly secured to the respective longitudinal member 3 and extending downwards therefrom towards the median plane M (Fig. 1). The support structure 8 further comprises an intermediate yoke 16 which comprises a connection plate 18 secured to the longitudinal member 3 between the yokes 14 and 15 and extends upwards in a projecting manner integrally forming with one of its upper ends a plane bracket 17 which projects outwards.

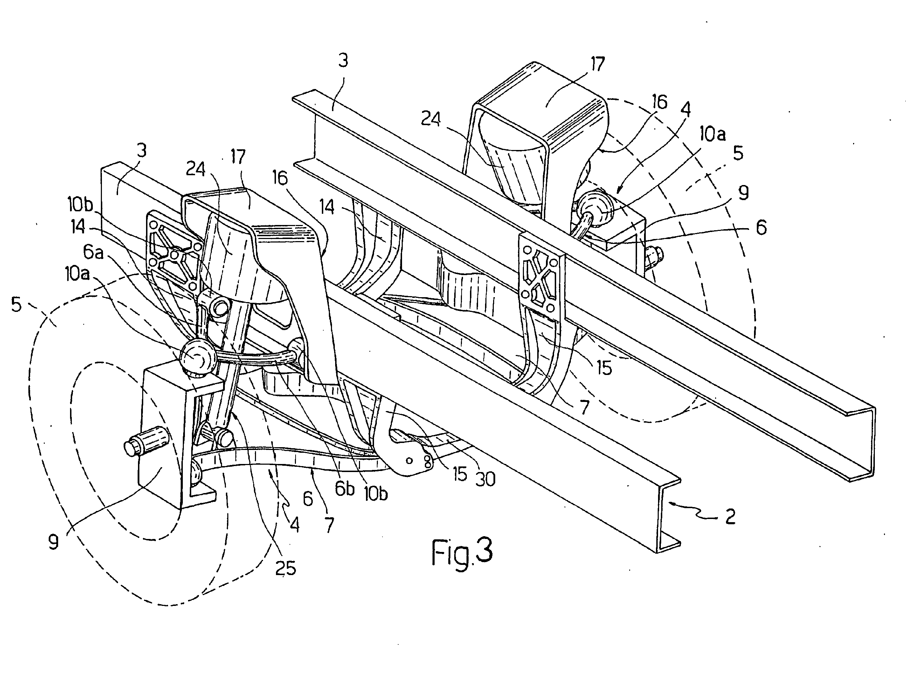

The upper arm 6 of the suspension 4 is substantially V-shaped and is formed by two bars 6a, 6b converging towards the ball joint 10a (Fig. 3) and hinged, at their opposite ends, to the connection plate 8 of the intermediate yoke 16 by means of a pair of bushings 10b defining a longitudinal axis of rotation A of the arm 6.

The lower arm 7, advantageously made from stamped metal sheet or by fusion of a light alloy, has a substantially triangular shape and is hinged in the vicinity of a pair of uprights to the lower ends of the front yoke 14 and the rear yoke 15 by means of respective bushings 11b defining a longitudinal axis of rotation B of the arm 7.

The suspension 4 further comprises an air or helical spring 24 and a shock absorber 25 which are coaxial. The shock absorber 25 extends from a cylinder 26 connected to the lower arm 7 of the suspension 4 and a rod (not shown in the drawings) connected to the bracket 17 of the intermediate yoke 16. The air spring 24 is coaxial with the shock absorber 25 and is axially compressed between the bracket 17 and a flange 27 rigid with the cylinder 26 of the shock absorber 25 so as to act in parallel with this shock absorber.

The lower ends of the front yokes 14 are rigidly connected together by means of a front crossbar 28 forming, with these yokes themselves, a cradle sub-assembly 29 that can be pre-assembled prior to mounting on the frame 2.

Identically, the lower ends of rear yokes 15 are rigidly connected by a rear crossbar 39, forming with these yokes themselves, a cradle sub-assembly 31 that can be pre-assembled prior to mounting on the frame 2.

The vehicle 1 comprises an engine 34 having an oil sump 35 which is, according to the present invention, of the "dry" type, i.e. has only a temporary collection function of the lubricating oil 1 which is supplied, via a pump (not shown), to an oil tank (also not shown) . In this way, the height of the sump 35 can be reduced to a minimum and the engine 34 is therefore of a smaller overall height.

The engine 34 is connected to the frame 3 by means of a front median support 36 (Fig. 2) and by means of a pair of rear lateral supports (not shown); the supports are of conventional elastic type with at least one portion of elastomer material adapted to absorb, in use, the vibrations of the engine 34.

According to a preferred embodiment of the invention, the front crossbar 28 integrally forms a bracket 33 on which the front support 36 of the engine 34 is secured. In this way, the front sub-assembly 29 has the dual function of supporting the engine 34 and providing respective points of attachment for the lower arms 7 of the suspensions 4.

The use of independent front suspensions 4 in a lorry 1 makes it possible to avoid the use of a rigid axle which, as it has to jolt vertically, has a vertical bulk in which the engine cannot be disposed. It is therefore possible to lower the position of the engine substantially without limits other than those imposed by distance from the road surface.

This architecture, in combination with the use of a dry sump 35, makes it possible substantially to reduce the height from the ground of the upper edge of the engine 34. The vehicle 1 may therefore, in accordance with the present invention, be provided with a cab (shown in part in Fig. 2) provided with a plane floor that is not so distant from the road surface.

By way of comparison, the upper height 34' of an engine of conventional type in combination with a conventional rigid axle suspension, is shown in dot-dash lines, and two typical profiles of the floor of known cabs are shown by 37' and 37" with a central tunnel 38 due to the above-mentioned bulk of the engine.

The operation of the suspensions 4 is known per se and is not therefore described in detail.

The advantages that can be obtained from the vehicle 1 of the present invention will be appreciated from an examination thereof.

As mentioned above, the independent suspensions 4 in combination with the engine 34 with the dry sump 35 make it possible to provide a plane floor 37 that is not so distant from the road surface. This means that the number or the height of the cab access steps can be reduced with evident advantages of ease of access in comparison with the cabs with plane floors that are currently commercially available.

Moreover, the "lowered" position of the engine is facilitated by the front sub-assembly 29 which supports, in addition to the lower arms 7 of the suspensions 4, the front support 36 of the engine 34. The sub-assemblies 29, 30, which simply and functionally supplement the frame 2 as regards the support functions of the suspensions 4 and the engine 34, may be pre-assembled thus reducing assembly line times.

The particularly low position of the front connection of the engine makes it possible to reduce and potentially to eliminate the inclination of the axis of the transmission shaft with respect to horizontal; this increases the efficiency of the transmission and, in the case of zero inclination, the lateral supports of the engine may be identical, thus enabling economies of scale.

Lastly, the lowering of the floor makes it possible to reduce the overall height of the cab, with the internal height remaining the same, thus improving the stability and reducing the aerodynamic drag of vehicles with bodies of small height.

It will lastly be appreciated that modifications and variations that do not depart from the scope of protection of the invention may be made to the vehicle 1. In particular, the support structures 8 may be integrated, for instance by making the yokes 14, 15 and 16 integral or such that they can be pre-assembled, and forming a pre-assembled "sub-frame" on which the suspensions 4 and possibly, by integrating the lateral supports of the engine with the yokes 16, the engine 34, can be mounted offline.

## Claims

1. A lorry (1) comprising a frame (2) provided with a pair of longitudinal members (3), an engine (4), a plurality of supports (36) for connecting the engine to the frame (2), front suspension members (4) to connect respective front wheels (5) of the lorry (1) to the frame (2), and a cab (32) provided with a substantially plane floor (37), the suspension means comprising independent suspensions (4) for respective front wheels (5) and the engine (34) comprising a dry sump (35) in order to reduce the vertical bulk of the engine (34) and, thereby, the height of the floor (37), each independent suspension (4) comprising a pair of respective upper and lower suspension arms (6, and a support structure (8) rigidly secured to the frame (2), the suspensions arms (6, 7) being hinged on this support structure (8) and connected by joints to a spindle (9) of the relative wheel (5), each support structure (8) comprising at least a front yoke (14) and a rear yoke (15) secured to a respective longitudinal member (3) of the frame (2) and extending downwards from these longitudinal members (3), the front yokes (14) forming a first connection means for the lower arms (7) of the suspensions (4), these lower arms (7) being hinged on the front yokes (14) by means of respective first bushings (10b) and on the rear yokes (15) by means of respective second bushings (11b),
**characterised in that** a front crossbar (28) secured rigidly to respective lower ends of these front yokes (14), defining second means (33) for the connection of the front support (36) of the engine (34).

2. A lorry as claimed in claim 1, **characterised in that** the second connection means are formed by a bracket (33) rigid with the front crossbar (28).

3. A lorry as claimed in claim 1 or 2, **characterised in that** it comprises a rear crossbar (39) connecting respective lower ends of the rear yokes (15).

4. A lorry as claimed in any of the preceding, **characterised in that** the independent suspensions (4) comprise respective shock absorbers (25) and respective air springs (24) coaxial with these shock absorbers (25), the support structures (8) comprise respective intermediate yokes (16) forming connection means (18) for the upper arms (6) of the suspensions (4) and respective brackets (27), the shock absorbers (25) being interposed between the brackets (17) and the lower arms.

## Patentansprüche

1. Lastkraftwagen (1), welcher einen Rahmen (2) umfasst, der mit einem Paar von Längsträgern (3), einem Motor (4), mehreren Auflagern (36) für die Befestigung des Motors am Rahmen (2), vorderen Aufhängungsbauteilen (4) zur Befestigung der jeweiligen Vorderräder (5) des Lastkraftwagens (1) am Rahmen (2) und einem mit einem im Wesentlichen ebenen Boden (37) versehenen Fahrerhaus (32) ausgestattet ist, wobei die Aufhängungsmittel unabhängige Aufhängungen (4) für die jeweiligen Vorderräder (5) umfassen und der Motor (34) einen Trockensumpf (35) umfasst, um die vertikale Ausdehnung des Motors (34) und **dadurch** die Höhe des Bodens (37) zu verringern, wobei jede unabhängige Aufhängung (4) ein Paar von zugehörigen oberen und unteren Aufhängungsstreben (6, 7) und eine starr am Rahmen (2) befestigte Stützvorrichtung (8) umfasst und die Aufhängungsstreben (6, 7) schwenkbar an dieser Stützvorrichtung (8) befestigt und durch Gelenke mit dem Zapfen (9) des zugehörigen Rades (5) verbunden sind, wobei jede Stützvorrichtung (8) mindestens ein vorderes Joch (14) und ein hinteres Joch (15) umfasst, welche am zugehörigen Längsträger (3) des Rahmens (2) befestigt sind und sich von diesen Längsträgern (3) aus nach unten erstrecken, wobei die vorderen Joche (14) ein erstes Befestigungsmittel für die unteren Streben (7) der Aufhängungen (4) bilden und diese unteren Streben (7) schwenkbar an den vorderen Jochen (14) mittels der zugehörigen ersten Lagerbuchsen (10b) und an den hinteren Jochen (15) mittels der zugehörigen zweiten Lagerbuchsen (11b) befestigt sind, **dadurch gekennzeichnet, dass** ein vorderer Querträger (28) an den zugehörigen unteren Enden dieser vorderen Joche (14) starr befestigt ist, wodurch zweite Mittel (33) zur Befestigung des vorderen Auflagers (36) des Motors (34) festgelegt werden.

2. Lastkraftwagen gemäß Anspruch 1, **dadurch gekennzeichnet, dass** die zweiten Befestigungsmittel durch eine starr mit dem vorderen Querträger (28) verbundene Konsole (33) gebildet werden.

3. Lastkraftwagen gemäß Anspruch 1 oder 2, **dadurch gekennzeichnet, dass** er einen hinteren Querträger (39) umfasst, welcher die zugehörigen unteren Enden der hinteren Joche (15) verbindet.

4. Lastkraftwagen gemäß irgend einem der vorangehenden Ansprüche, **dadurch gekennzeichnet, dass** die unabhängigen Aufhängungen (4) zugehörige Stoßdämpfer (25) und zugehörige, zu diesen Stoßdämpfern (25) koaxial angeordnete Luftfedern (24) umfassen, wobei die Stützvorrichtungen (8) zugehörige Zwischenjoche (16) umfassen, welche Befestigungsmittel (18) für die oberen Streben (6) der Aufhängungen (4) und die zugehörigen Halterungen (27) bilden und die Stoßdämpfer (25) zwischen den Halterungen (17) und den unteren Streben angeordnet sind.

## Revendications

1. Camion (1) comprenant un cadre (2) doté d'une paire d'éléments longitudinaux (3), un moteur (4), une pluralité de supports (36) permettant de relier le moteur au cadre (2), des éléments de suspension avant (4) permettant de relier les roues avant respectives (5) du camion (1) au cadre (2), et une cabine (32) munie d'un plancher essentiellement plan (37), les moyens de suspension comprenant des suspensions indépendantes (4) pour les roues avant respectives (5) et le moteur (34) comprenant un carter sec (35) afin de réduire l'encombrement vertical du moteur (34) et, ainsi, la hauteur du plancher (37), chaque suspension indépendante (4) comprenant une paire de bras de suspension inférieurs et supérieurs respectifs (6, 7) et une structure de support (8) fixée de façon rigide au cadre (2), les bras de suspension (6, 7) étant articulés à cette structure de support (8) et reliés par des joints à un axe (9) de la roue relative (5), chaque structure de support (8) comprenant au moins une fourche avant (14) et une fourche arrière (15) fixée à un élément longitudinal respectif (3) du cadre (2) et s'étendant vers le bas depuis ces éléments longitudinaux (3), les fourches avant (14) formant un premier moyen de liaison pour les bras inférieurs (7) des suspensions (4), ces bras inférieurs (7) étant articulés sur les fourches avant (14) au moyen de premières bagues respectives (10b) et aux fourches arrière (15) au moyen des secondes bagues respectives (11b), **caractérisé en ce qu'**une traverse avant (28) est fixée de façon rigide aux extrémités inférieures respectives de ces fourches avant (14), définissant des seconds moyens (33) de liaison du support avant (36) du moteur (34).

2. Camion selon la revendication 1, **caractérisé en ce que** les seconds moyens de liaison sont formés par un support (33) rigide avec la traverse avant (28).

3. Camion selon la revendication 1 ou 2, **caractérisé en ce qu'**il comprend une traverse arrière (30) reliant les extrémités inférieures respectives des fourches arrière (15).

4. Camion selon l'une quelconque des revendications précédentes, **caractérisé en ce que** les suspensions indépendantes (4) comprennent des amortisseurs respectifs (25) et des ressorts pneumatiques respectifs (24) coaxiaux avec ces amortisseurs (25), les structures de support (8) comprennent des fourches intermédiaires respectives (16) formant des moyens de liaison (18) pour les bras supérieurs (6) des suspensions (4) et des supports respectifs (27), les amortisseurs (25) étant interposés entre les supports (17) et les bras inférieurs.
